# EUROPEAN PATENT SPECIFICATION

(11) **EP 2 935 055 B1**
(45) Date of publication and mention of the grant of the patent: **27.07.2016**
(21) Application number: 12812944.2
(22) Date of filing: 19.12.2012
(51) Int. Cl.: B65G 31/00, B65G 47/14

(54) **COMPONENT FEEDER WITH IMPROVED COMPONENT RECEPTION**
KOMPONENTENZUFÜHRER MIT VERBESSERTER KOMPONENTENAUFNAHME
DISTRIBUTEUR D'ÉLÉMENTS COMPRENANT UNE RÉCEPTION D'ÉLÉMENTS AMÉLIORÉE

(43) Date of publication of application: 28.10.2015
(73) Proprietor: ABB Technology Ltd., 8050 Zürich (CH)
(72) Inventor: SIRKETT, Daniel, S-722 10 Västerås (SE); KRUTZLER, Stefan, A-8241 Dechantskirchen (AT)
(74) Representative: Savela, Reino Aleksi
(86) International application number: PCT/EP2012/076059
(87) International publication number: WO 2014/094837

(56) References cited:
- EP-A1- 0 105 555
- WO-A1-89/02865
- WO-A2-94/20395
- FR-A1- 2 739 844
- GB-A- 533 438
- US-A- 502 895

## Description

### TECHNICAL FIELD

The present invention relates to a device for feeding components from a bulk storage.

### BACKGROUND ART

Component feeders lifting up a selection of components from a bulk storage are known in the art of component feeders. DE10126188 discloses one type of component feeder where a lift platform on which the selection of components is resting is vibrated or rotated to spread the selection of components such that individual components can be easily recognized by a vision system and picked by a manipulator. The area of the lift platform needs to be relatively small in relation to the total footprint of the feeder, and consequently the pick surface area is also small. In order for the components to be well-spread many of them need to be returned back to the bulk storage, which leads to an undesired wear of the components to be fed.

WO8807015 and WO8902865 (which corresponds to the preamble of claim 1) disclose component feeders where the lift has an inclined platform so that at the uppermost position of the lift the respective selection of components glides on a vibrating track conveying the components further. The vibrating tracks according to WO8807015 and WO8902865 can be used as pick surfaces from which a manipulator picks the components after a vision system has recognized them, although this is not explicitly disclosed in any of the documents because they aim at arranging the components. Since the documents WO8807015 and WO8902865 do not disclose vision systems, they also do not consider how to spread the components to be easily recognizable. The embodiments according to WO8807015 and WO8902865 assume that there is a vertical wall preventing the components from falling back to the bulk storage before the lift reaches the level of the vibrating track.

There remains a desire to further improve the existing component feeders.

### SUMMARY OF THE INVENTION

One object of the invention is to provide a component feeder with an improved way of receiving a selection of components on a pick surface.

A further object of the invention is to provide an improved method for receiving a selection of components on a pick surface of a component feeder.

These objects are achieved by the device according to appended claim 1 and the method according to appended claim 7.

The invention is based on the realization that movement of a pick surface can be utilized for receiving a selection of components on it.

According to a first aspect of the invention, there is provided a component feeder according to claim 1 comprising a lift for elevating a selection of components from a bulk storage, and a pick surface adjacent to the lift for receiving the selection of components. The pick surface is configured to move below the selection of components to receive them. By utilizing the movement of the pick surface to receive the selection of components no additional means are needed for getting the selection of components on the pick surface. According to one embodiment of the invention the lift comprises a lift platform for supporting the selection of components, and the lift is configured to decelerate that fast when moving in upward direction, or to accelerate in downward direction, that the selection of components loses contact with the lift platform. By this measure moving of the pick surface below the selection of components is enabled without an edge of the pick surface pushing the components and potentially damaging them.

According to one embodiment of the invention the pick surface is configured to move below the selection of components when the selection of components is not in contact with the lift platform. By this measure the selection of components is received on the pick surface without pushing and potentially damaging the components.

According to one embodiment of the invention the component feeder further comprises a jerk generator for setting the pick surface into a motion that spreads the selection of components on the pick surface. The components should be well spread on the pick surface in order them to be easily recognized by a vision system and picked by a manipulator. By utilizing the movement of the pick surface to spread the selection of components on it no additional means are needed for spreading the selection of components on the pick surface.

According to one embodiment of the invention the jerk generator is configured to set the pick surface into a reciprocating linear motion. This is a preferred type of motion since it can be reached by simple means such as a pneumatic cylinder.

According to one embodiment of the invention the jerk generator is configured to give the pick surface a higher acceleration in a first direction than in a second direction, the first direction being opposite to the second direction. This kind of motion effectively spreads the components.

According to a second aspect of the invention, there is provided a method according to claim 7 for receiving a selection of components on the pick surface of a component feeder. The method comprises the steps of: elevating a selection of components from a bulk storage;.and moving a pick surface below the selection of components to receive them. By utilizing the movement of the pick surface to receive the selection of components no additional means are needed for getting the selection of components on the pick surface.

### BRIEF DESCRIPTION OF THE DRAWINGS

The invention will be explained in greater detail with reference to the accompanying drawings, wherein
- figure 1: shows a component feeder,
- figure 2: shows a cross-sectional view of the component feeder of figure 1,
- figure 3: illustrates reception of components,
- figure 4: illustrates reception of components,
- figure 5: illustrates reception of components according to the invention, and
- figure 6: illustrates spreading of components.

### DESCRIPTION OF PREFERRED EMBODIMENTS

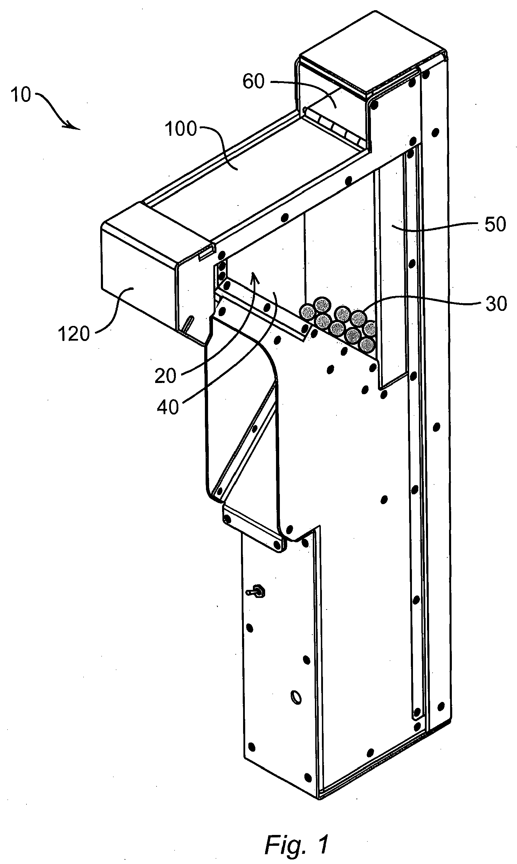

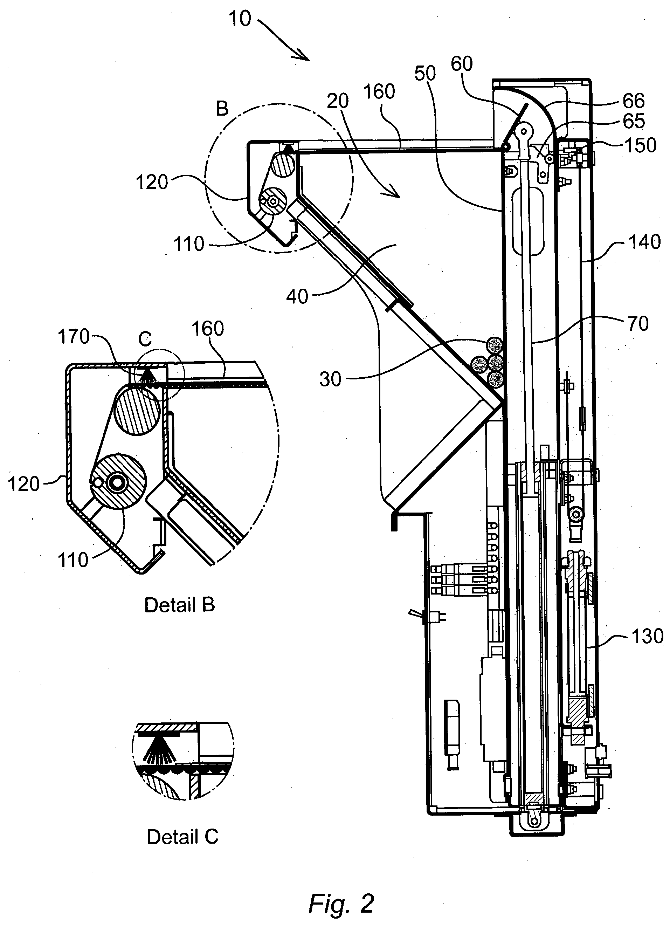

Referring to figures 1 and 2, a component feeder 10 according to an embodiment not part of the invention the invention comprises a triangular hopper 20 for receiving a bulk storage of components 30 to be fed. The side walls 40 of the hopper 20 are transparent. At the rear of the hopper 20 there is provided a vertically acting lift 50 with a lift platform 60 for supporting the components 30 on their way up. The lift 50 is operated by a first pneumatically operated piston 70 mounted under the lift platform 60. A curved plate 66 is provided to prevent the components 30 from coming under the lift platform 60 when in a tilted position. A retractable pick surface 100 covers the bulk storage completely in its unfurled state shown in figures 1 and 2. In a furled state the pick surface 100 is stored coiled around a spring driven capstan 110 in a pick surface compartment 120 in the upper front region of the component feeder 10 shown at detail B of figure 2. Unfurling is effected by a second pneumatically operated piston 130 whose movement is transmitted by a flexible cord 140 passing over pullies 150. During furling and unfurling the pick surface 100 glides in grooves 160 provided at the side walls 40 of the hopper 20. A brush 170, shown in detail at detail C of figure 2, is provided to clean the pick surface 100 when furled and unfurled.

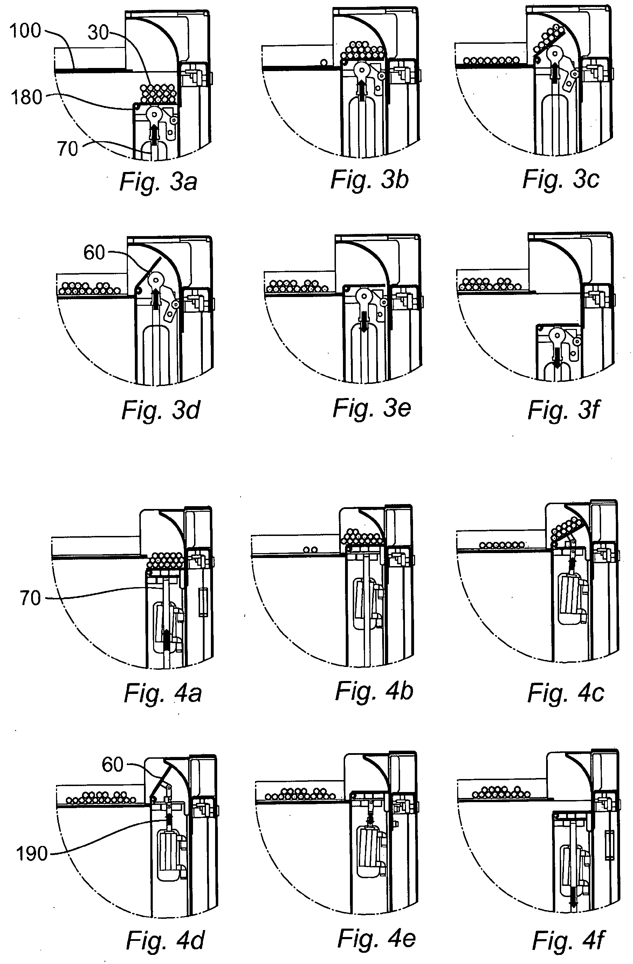

The receiving of components 30 on the pick surface 100 is explained with reference to figure 3 (not part of the invention). A selection of components 30 is lifted up on the lift platform 60 to the level of the pick surface 100, or slightly above that level. When the lift platform 60 reaches this level, a mechanism 65 locking the lift platform 60 at a horizontal position is released, and the lift platform 60 can freely rotate about a hinge 180. The first piston 70 continues extracting, causing the lift platform 60 to incline about the hinge 180 and to push the selection of components 30 towards the pick surface 100. The pick surface 100 thereby receives the selection of components 30 falling by gravity, after which the first piston 70 is retracted to pick up a next selection of components 30. Alternatively, instead of the first piston 70, a separate third piston 190 can be used to incline the lift platform 60 according to the embodiment shown in figure 4, which is not part of the invention.

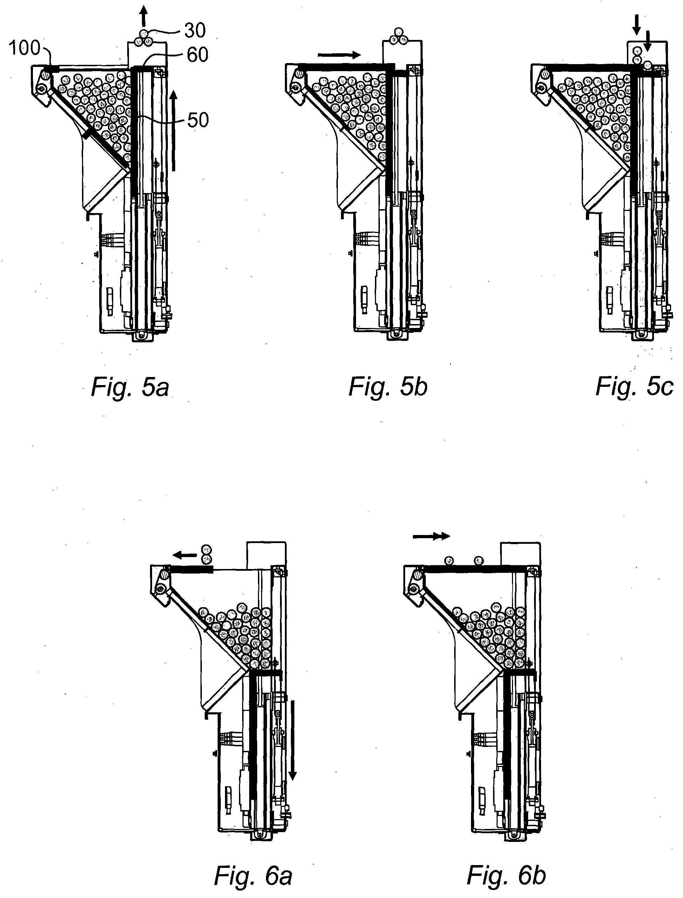

Since the inclination of the lift platform 60 according to figures 3 and 4 complicates the mechanical structure of the component feeder 10, a solution for receiving the selection of components 30 on the pick surface 100 according to the invention is suggested in figure 5. At its uppermost position the lift 50 stops that fast that the selection of components 30 loses contact with the lift platform 60. When the selection of components 30 is "hanging in the air", the pick surface 100 is moved below the components 30 to catch them on their way down. Alternatively, the selection of components 30 may be caused to lose contact with the lift platform 60 by moving the lift 50 downwards with a sufficiently high acceleration. The lift platform 60 in this solution does not need to tilt, and the previously mentioned curved plate 66 and hinge 180 are not required. According to an alternative way of receiving the selection of components 30, the pick surface 100 can simply be moved between the components 30 and the lift platform 60 when the two are in contact with each other, provided that the pick surface 100 is relatively thin and can move below the components 30 without damaging them.

Irrespective of the way in which the selection of components 30 is received on the pick surface 100, it may be desirable to further spread the selection of components 30 on the pick surface 100. This is the case especially with the solutions illustrated in figures 3-5 which result in the components 30 being tightly together at one end of the pick surface 100. The component feeder 10 therefore comprises a jerk generator for setting the pick surface 100 into a motion that spreads the selection of components 30 on the pick surface 100. The second piston 130 that is used for unfurling the pick surface 100 can also be used as the jerk generator. According to figure 6, the pick surface 100 is retracted slowly with the selection of components 30 at one end. Suddenly the pick surface 100 changes direction with a relatively high acceleration such that the components 30 are spread out over the pick surface 100 as a result from the jerk. When necessary, the jerk can be repeated a desired number of times to further spread out the components 30. When desired, jerks can be provided in opposite direction in order to cause the components 30 to fall back into the hopper 20. The invention is not limited to the embodiments shown above but the person skilled in the art may modify them in a plurality of ways within the scope of the invention as defined by the claims.

## Claims

1. A component feeder (10) comprising:
a lift (50) for elevating a selection of components (30) from a bulk storage, the lift (50) comprising a lift platform (60) for supporting the selection of components (30), and
a pick surface (100) adjacent to the lift (50) for
receiving the selection of components (30),
**characterized in that** the pick surface (100) is configured to move between the lift platform (60) and the selection of components (30) to receive them.

2. A component feeder (10) according to claim 1, wherein the lift (50) is configured to decelerate that fast when moving in upward direction, or to accelerate in downward direction, that the selection of components (30) loses contact with the lift platform (60).

3. A component feeder (10) according to claim 2, wherein the pick surface (100) is configured to move below the selection of components (30) when the selection of components (30) is not in contact with the lift platform (60).

4. A component feeder (10) according to any of the preceding claims, wherein the component feeder (10) further comprises a jerk generator for setting the pick surface (100) into a motion that spreads the selection of components (30) on the pick surface (100).

5. A component feeder (10) according to claim 4, wherein the jerk generator is configured to set the pick surface (100) into a reciprocating linear motion.

6. A component feeder (10) according to claim 5, herein the jerk generator is configured to give the pick surface (100) a higher acceleration in a first direction than in a second direction, the first direction being opposite to the second direction.

7. A method for receiving a selection of components (30) on a pick surface (100) of a component feeder (10), the method comprising the steps of:
- providing a lift platform (60) on which the selection of components (30) is elevated;
- elevating the selection of components (30) from a bulk storage; and
- moving the pick surface (100) between the lift platform (60) and the selection of components (30) to receive them.

8. A method according to claim 7 further comprising the step of:
- decelerating, the lift platform. (60) that fast when moving in upward direction, or accelerating in downward direction, that the selection of components (30) loses contact with the lift platform (60).

9. A method according to claim 8 further comprising the step of:
- moving the pick surface (100) below the selection of components (30) when the selection of components (30) is not in contact with the lift platform (60).

10. A method according to any of claims 7-9 further comprising the step of:
setting the pick surface (100) into a motion that spreads the selection of components (30) on the pick surface (100).

11. A method.according to claim 10 further comprising the step of:
- settling the pick surface (100) into a reciprocating linear motion.

12. A method according to claim 11 further comprising the step of :
- giving the pick surface (100) a higher acceleration in a first direction than in a second direction, the first direction being opposite to the second direction.

## Patentansprüche

1. Komponentenzuführer (10), umfassend:
eine Hebevorrichtung (50) zum Anheben einer Auswahl von Komponenten (30) aus einem Massenspeicher, wobei die Hebevorrichtung (50) eine Hebebühne (60) zum Tragen der Auswahl von Komponenten (30) und
eine Aufnahmefläche (100) benachbart der Hebevorrichtung (50) zum Aufnehmen der Auswahl von Komponenten (30), **dadurch gekennzeichnet, dass** die Aufnahmefläche (100) zum Bewegen zwischen der Hebebühne (60) und der Auswahl von Komponenten (30) zum Aufnehmen derselben konfiguriert ist.

2. Komponentenzuführer (10) nach Anspruch 1, wobei die Hebevorrichtung (50), wenn sie sich in Aufwärtsrichtung bewegt, so schnell abgebremst wird und in Abwärtsrichtung beschleunigt, dass die Auswahl von Komponenten (30) den Kontakt mit der Hebebühne (60) verliert.

3. Komponentenzuführer (10) nach Anspruch 2, wobei die Aufnahmefläche (100) zum Bewegen unter der Auswahl von Komponenten (30) konfiguriert ist, wenn die Auswahl von Komponenten (30) nicht in Kontakt mit der Hebebühne (60) ist.

4. Komponentenzuführer (10) nach einem der vorhergehenden Ansprüche, wobei der Komponentenzuführer (10) ferner einen Ruckgenerator zum Einstellen der Aufnahmefläche (100) in einer Bewegung umfasst, welche die Auswahl der Komponenten (30) auf der Aufnahmefläche (100) verteilt.

5. Komponentenzuführer (10) nach Anspruch 4, wobei der Ruckgenerator zum Einstellen der Aufnahmefläche (100) in eine hin- und hergehende lineare Bewegung konfiguriert ist.

6. Komponentenzuführer (10) nach Anspruch 5, wobei der Ruckgenerator konfiguriert ist, um der Aufnahmeoberfläche (100) eine höhere Beschleunigung in einer ersten Richtung als in einer zweiten Richtung zu verleihen, wobei die erste Richtung entgegengesetzt zur zweiten Richtung ist.

7. Verfahren zur Aufnahme einer Auswahl von Komponenten (30) auf einer Aufnahmefläche (100) eines Komponentenzuführers (10), wobei das Verfahren die folgenden Schritte umfasst:
- Bereitstellen einer Hebebühne (60), auf der die Auswahl der Komponenten (30) angehoben wird;
- Anheben der Auswahl von Komponenten (30) aus einem Massenspeicher; und
- Bewegen der Aufnahmefläche (100) zwischen der Hebebühne (60) und der Auswahl von Komponenten (30) zur Aufnahme davon.

8. Verfahren nach Anspruch 7, das ferner die folgenden Schritte umfasst:
- Abbremsen der Hebebühne (60), wenn sie sich in Aufwärtsrichtung bewegt, oder Beschleunigen in Abwärtsrichtung so schnell, dass die Auswahl von Komponenten (30) den Kontakt mit der Hebebühne (60) verliert.

9. Verfahren nach Anspruch 8, das ferner die folgenden Schritte umfasst:
- Bewegen der Aufnahmefläche (100) unter die Auswahl von Komponenten (30), wenn die Auswahl von Komponenten (30) nicht in Kontakt mit der Hebebühne (60) ist.

10. Verfahren nach einem der Ansprüche 7 bis 9, ferner umfassend die Schritte:
- Einstellen der Aufnahmefläche (100) in eine Bewegung, welche die Auswahl von Komponenten (30) auf der Aufnahmefläche (100) verteilt.

11. Verfahren nach Anspruch 10, das ferner die folgenden Schritte umfasst:
- Einstellen der Aufnahmeoberfläche (100) in eine hin- und hergehende lineare Bewegung.

12. Verfahren nach Anspruch 11, das ferner die folgenden Schritte umfasst:
Verleihen einer höheren Beschleunigung in einer ersten Richtung als in einer zweiten Richtung der Aufnahmeoberfläche (100), wobei die erste Richtung entgegengesetzt zur zweiten Richtung ist.

## Revendications

1. Distributeur d'éléments (10) comprenant:
un élévateur (50) pour élever une sélection d'éléments (30) à partir d'un stockage en vrac, l'élévateur (50) comprenant une plate-forme élévatrice (60) pour supporter la sélection d'éléments (30), et
une surface de préhension (100) adjacente à l'élévateur (50) pour recevoir la sélection d'éléments (30),
**caractérisé en ce que** la surface de préhension (100) est configurée de manière à se déplacer entre la plate-forme élévatrice (60) et la sélection d'éléments (30) en vue de recevoir ceux-ci.

2. Distributeur d'éléments (10) selon la revendication 1, dans lequel l'élévateur (50) est configuré de manière à décélérer rapidement lorsqu'il se déplace dans la direction montante, ou à accélérer lorsqu'il se déplace dans la direction descendante, de telle sorte que la sélection d'éléments (30) ne soit plus en contact avec la plate-forme élévatrice (60).

3. Distributeur d'éléments (10) selon la revendication 2, dans lequel la surface de préhension (100) est configurée de manière à se déplacer en dessous de la sélection d'éléments (30) lorsque la sélection d'éléments (30) n'est pas en contact avec la plate-forme élévatrice (60).

4. Distributeur d'éléments (10) selon l'une quelconque des revendications précédentes, dans lequel le distributeur d'éléments (10) comprend en outre un générateur de secousses pour placer la surface de préhension (100) dans un mouvement qui disperse la sélection d'éléments (30) sur la surface de préhension (100).

5. Distributeur d'éléments (10) selon la revendication 4, dans lequel le générateur de secousses est configuré de manière à placer la surface de préhension (100) dans un mouvement linéaire alternatif.

6. Distributeur d'éléments (10) selon la revendication 5, dans lequel le générateur de secousses est configuré de manière à donner à la surface de préhension (100) une accélération plus importante dans une première direction que dans une seconde direction, la première direction étant opposée à la seconde direction.

7. Procédé pour recevoir une sélection d'éléments (30) sur une surface de préhension (100) d'un distributeur d'éléments (10), le procédé comprenant les étapes suivantes:
- prévoir une plate-forme élévatrice (60) sur laquelle la sélection d'éléments (30) est élevée;
- élever la sélection d'éléments (30) à partir d'un stockage en vrac; et
- déplacer la surface de préhension (100) entre la plate-forme élévatrice (60) et la sélection d'éléments (30) en vue de recevoir ceux-ci.

8. Procédé selon la revendication 7, comprenant en outre l'étape consistant à décélérer rapidement la plate-forme élévatrice (60) lorsqu'elle se déplace dans la direction montante, ou accélérer dans la direction descendante, de telle sorte que la sélection d'éléments (30) ne soit plus en contact avec la plate-forme élévatrice (60).

9. Procédé selon la revendication 8, comprenant en outre l'étape consistant à déplacer la surface de préhension (100) en dessous de la sélection d'éléments (30) lorsque la sélection d'éléments (30) n'est pas en contact avec la plate-forme élévatrice (60).

10. Procédé selon l'une quelconque des revendications 7 à 9, comprenant en outre l'étape consistant à placer la surface de préhension (100) dans un mouvement qui disperse la sélection d'éléments (30) sur la surface de préhension (100).

11. Procédé selon la revendication 10, comprenant en outre l'étape consistant à placer la surface de préhension (100) dans un mouvement linéaire alternatif.

12. Procédé selon la revendication 11, comprenant en outre l'étape consistant à donner à la surface de préhension (100) une accélération plus importante dans une première direction que dans une seconde direction, la première direction étant opposée à la seconde direction.
